(19) Europäisches Patentamt
European Patent Office
Office européen des brevets

(11) **EP 1 764 521 B1**

(12) **EUROPEAN PATENT SPECIFICATION**

(45) Date of publication and mention
of the grant of the patent:
**01.06.2011 Bulletin 2011/22**

(51) Int Cl.:
*F16C 19/52* (2006.01)     *F16C 19/18* (2006.01)
*F16C 19/38* (2006.01)

(21) Application number: **06019173.1**

(22) Date of filing: **13.09.2006**

(54) **Sensor-equipped rolling bearing assembly**

Wälzlagereinheit ausgerüstet mit Sensor

Ensemble à roulement muni de capteur

(84) Designated Contracting States:
**DE FR IT**

(30) Priority: **14.09.2005 JP 2005266481**
**07.11.2005 JP 2005322651**

(43) Date of publication of application:
**21.03.2007 Bulletin 2007/12**

(73) Proprietor: **JTEKT Corporation**
**Osaka-shi**
**Osaka 542-8502 (JP)**

(72) Inventors:
• **Motohashi, Nobutsuna**
**Osaka-shi**
**Osaka 542-8502 (JP)**
• **Ueyama, Hirochika**
**Osaka-shi**
**Osaka 542-8502 (JP)**

• **Miyagawa, Yasukata**
**Osaka-shi**
**Osaka 542-8502 (JP)**
• **Kouduki, Kenichi**
**Osaka-shi**
**Osaka 542-8502 (JP)**
• **Taniguchi, Manabu**
**Osaka-shi**
**Osaka 542-8502 (JP)**

(74) Representative: **Sajda, Wolf E. et al**
**Meissner, Bolte & Partner GbR**
**Postfach 86 06 24**
**81633 München (DE)**

(56) References cited:
EP-A- 1 605 268     JP-A- 2003 336 652
JP-A- 2005 076 729     JP-A- 2005 114 710
JP-A- 2005 172 077     US-A1- 2002 097 040

**Description**

BACKGROUND OF THE INVENTION

The present invention relates to a sensor-equipped rolling bearing assembly used for rotatably supporting a wheel of a vehicle such as an automotive vehicle.

Modern automotive vehicles require a variety of information pieces for providing operation control while the vehicles are moving, the information pieces including, for example, load acting on the road wheel, the number of revolutions thereof. For acquisition of such information pieces, a proposal has been made to mount a sensor to a rolling bearing assembly to which the wheel of the vehicle is mounted.

The conventionally known sensor-equipped rolling bearing assemblies include a bearing assembly which includes: a cylindrical fixed bearing ring fixed to a vehicle body; a rotary bearing ring which is disposed radially inwardly of the fixed bearing ring and to which the wheel is mounted; and a plurality of rows of rolling elements rollably interposed between these bearing rings. This bearing assembly has the sensor mounted to the fixed bearing ring such as to acquire information on the rotary bearing ring (see, for example, Japanese Unexamined Patent Publication JP-A-2002-340922).

In the bearing assembly of the above patent publication, the fixed bearing ring is formed with a through-hole radially extending therethrough. The sensor is fixedly inserted in the through-hole. The sensor has its measurement portion confronting an outside surface of the rotary bearing ring, so as to acquire the information on the rotary bearing ring.

In the sensor-equipped rolling bearing assembly disclosed in Japanese Unexamined Patent Publication JP-A-2002-340922, a plurality of through-holes must be formed in the fixed bearing ring in order to mount a plurality of sensors to the fixed bearing ring. In this case, the manufacture of the fixed bearing ring requires an additional step of forming the through-holes. In addition, it is required to mount each of the sensors in each of the through-holes. This results in a complicated assembly work. What is more, each of the sensors requires adjustment of gap defined between the sensor and the rotary bearing ring. This results in an increased number of assembly steps.

SUMMARY OF THE INVENTION

In view of the foregoing, the invention has been accomplished and has an object to provide a sensor-equipped rolling bearing assembly which allows for the omission of the positional adjustment of the respective sensors mounted therein and hence, is easy to assemble.

According to the invention, a sensor-equipped rolling bearing assembly comprises: a cylindrical fixed bearing ring to be fixed to a vehicle body; a rotary bearing ring rotatably inserted through the fixed bearing ring and possessing a wheel-mounting portion on an outboard side thereof; and a plurality of rows of rolling elements rollably interposed between these bearing rings, and is provided with a case member having a plurality of displacement sensors which are circumferentially arranged at predetermined space intervals and which detect gaps between themselves and an outside surface of an inboard end of the rotary bearing ring, the case member being mounted to the inboard end of the fixed bearing ring.

This constitution negates the need for discretely mounting the displacement sensors to the inboard end of the fixed bearing ring or the need for forming the sensor mounting through-holes in the fixed bearing ring, because the case member possesses the plurality of displacement sensors and is mounted to the inboard end of the fixed bearing ring. Furthermore, the bearing assembly is easy to assemble because the individual displacement sensors are positioned relative to the outside surface of the inboard end of the rotary bearing ring by mounting the case member to the fixed bearing ring.

The displacement sensor is capable of detecting the variations of the gap between itself and the outside surface of the inboard end of the rotary bearing ring, the gap variations being caused by a radial load applied to the wheel. In a case where the rotary bearing ring is so displaced as to incline relative to the fixed bearing ring (is subjected to a moment), the gap is varied more at the inboard end of the rotary bearing ring than at an axially central portion thereof. Therefore, the displacement sensor can achieve higher detection accuracy by taking measurement on the outside surface of the inboard end.

The displacement sensor may preferably be an inductance-type displacement sensor. Since the inductance-type displacement sensor is less susceptible to the earth magnetism, a constitution less susceptible to the earth magnetism can be embodied by mounting the bearing assembly equipped with this sensor to the vehicle such as the automotive vehicle which may move in any directions.

It is preferred that the case member further has a second displacement sensor for detecting a gap between itself and an axial-end face of the inboard end of the rotary bearing ring. In this case, the second displacement sensor can detect the variations of a gap between itself and the axial-end face of the inboard end of the rotary bearing ring, the gap variations being caused by an axial load on the wheel.

It is preferred in the above sensor-equipped rolling bearing assembly that the outside surface of the inboard end of the rotary bearing ring is so configured as to produce radial and axial variations of the gap between the outside surface and the displacement sensors when the load is applied to the rotary bearing ring. In this case, the displacement sensors circumferentially mounted to the case member are capable of detecting the radial and axial gap variations.

The rotary bearing ring may be formed with an annular recess in the outside surface of the inboard end thereof confronted by the plurality of displacement sensors. In this constitution, the axial displacement of the rotary bearing ring can be detected by the displacement sensors disposed circumferentially of the case member.

In a case where the displacement sensor is of the inductance type or of an eddy-current type, the rotary bearing ring may be formed with an annular band on the outside surface of the inboard end thereof confronted by the plurality of displacement sensors, the annular band being formed from a different material from that of the rotary bearing ring. In this case, as well, the axial displacement of the rotary bearing ring can be detected by the displacement sensors disposed circumferentially of the case member.

In the case where the displacement sensor is of the inductance type, it is preferred that an annular measurement subject member, which produces a greater inductance variation in the displacement sensors than the rotary bearing ring does, is mounted to the inboard end of the rotary bearing ring, wherein the displacement sensors detect gaps between themselves and an outside surface of the measurement subject member. This results in increased accuracies of the detection by the displacement sensors.

In the bearing assembly equipped with these sensors, the displacement sensors may preferably be connected to an arithmetic processor for calculating the respective direction components of the load applied to the rotary bearing ring by way of calculation using respective output values from the displacement sensors and a predetermined function previously stored in the processor. This makes it possible to calculate the load on the rotary bearing ring based on the output values from the displacement sensors. The predetermined function may be obtained by previously determining the values outputted from the respective displacement sensors in response to the input of the respective direction components of the load.

## BRIEF DESCRIPTION OF THE DRAWINGS

FIG. 1    is a sectional view showing a sensor-equipped rolling bearing assembly according to one embodiment of the invention;

FIG.2    is a view of the bearing assembly of FIG. 1 as seen from an inboard along an axial direction;

FIG.3    is a view of the bearing assembly of FIG.2, showing a state where a cover member of a case member is removed;

FIG.4    is a sectional view showing a sensor-equipped rolling bearing assembly according to another embodiment of the invention;

FIG.5    is a fragmentary sectional view showing a sensor-equipped rolling bearing assembly according to yet another embodiment of the invention;

FIG.6    is a fragmentary sectional view showing a sensor-equipped rolling bearing assembly according to yet another embodiment of the invention;

FIG.7    is a sectional view showing a sensor-equipped rolling bearing assembly according to still another embodiment of the invention; and

FIG.8    is a group of graphs showing the displacement of a rotary bearing ring as determined from values outputted from individual sensors when force/moment is applied to a wheel mounted to the rotary bearing ring.

## DETAILED DESCRIPTION

A sensor-equipped rolling bearing assembly (hereinafter, also referred to simply as "bearing assembly") according to an embodiment of the invention will hereinbelow be described with reference to the accompanying drawings.

## BEARING ASSEMBLY OF THE INVENTION

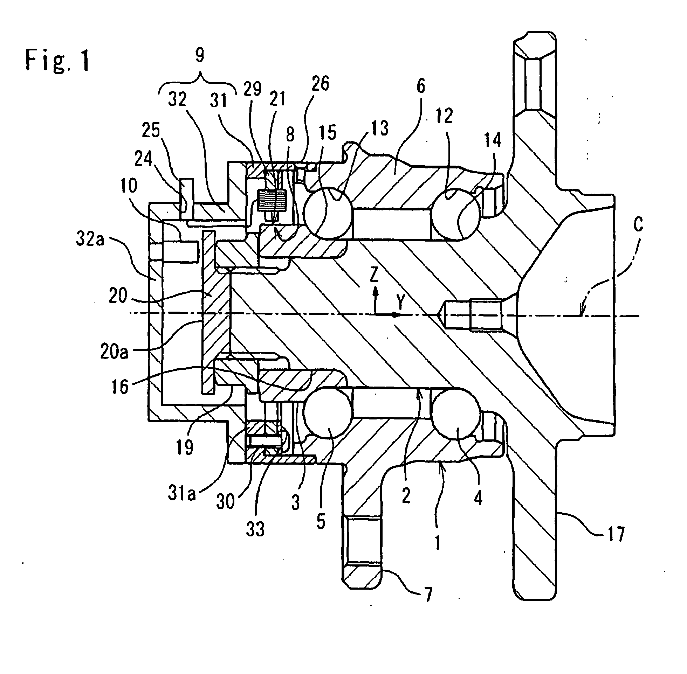

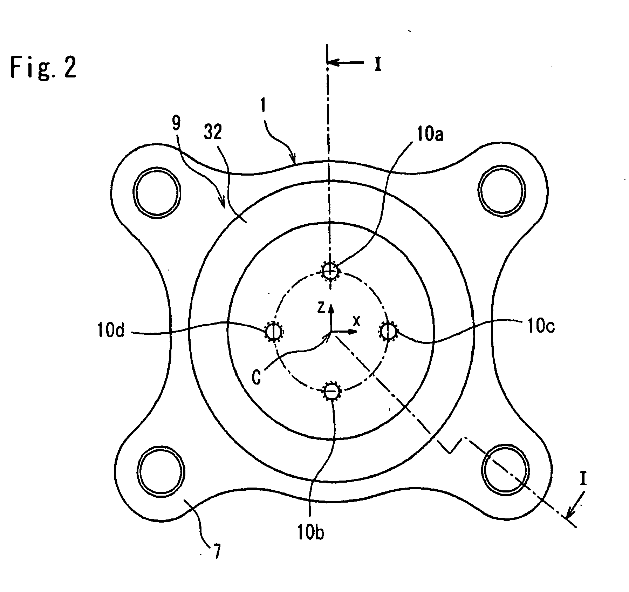

FIG.1 is a sectional view showing a bearing assembly according to one embodiment of the invention. FIG.2 is a view of this bearing assembly as seen from an inboard side along an axial direction thereof. In FIG.1, the right-hand side is an outboard side with respect to a vehicle, whereas the left-hand side is an inboard side with respect to the vehicle.

The bearing assembly according to the embodiment includes: a cylindrical outer ring 1; an inner shaft 2 inserted through the outer ring 1; an inner ring member 3 fitted about an inboard end of the inner shaft 2; double rows of rolling elements 4, 5, each row including a plurality of balls. These components constitute a double-row angular ball bearing. The balls in each row as the rolling element 4 or 5 are retained by a cage (not shown) as circumferentially arranged at predetermined space intervals.

According to the invention, a direction along a centerline C of the bearing assembly is defined as Y-axis, a horizontal direction orthogonal to the Y-axis is defined as X-axis, and a direction orthogonal to both the Y-axis and X-axis is defined as Z-axis. That is, the Y-axis defines a transversely horizontal direction of the vehicle, the X-axis defines a front-rear horizontal direction thereof, and the Z-axis defines a vertical direction thereof.

In this bearing assembly, the outer ring 1 constitutes a fixed bearing ring fixed to a vehicle body, whereas the inner shaft 2 and the inner ring member 3 constitute a rotary bearing ring disposed on a wheel side. The double rows of rolling elements 4, 5 are rollably interposed between the fixed bearing ring and the rotary bearing ring. Thus, the fixed bearing ring and the rotary bearing ring are disposed in coaxial relation such that the rotary bearing ring along with the wheel (not shown) is free to rotate relative to the fixed bearing ring.

The inner shaft 2 includes a flange 17 which radially outwardly extends from an outboard side thereof. The flange 17 serves as a mounting portion for the wheel and a brake disk. The wheel and such are mounted to the flange 17 by means of unillustrated bolts. The inner ring member 3 is fitted about the inner shaft 2 at an inboard portion thereof. The inner ring member 3 is secured to the inner shaft 2 by means of a nut 19 threadedly engaged with the inboard end of the inner shaft 2. Respective inner raceway surfaces 14, 15 for the rolling elements 4, 5 are formed on outside surfaces of the inner shaft 2 and of the inner ring member 3.

The outer ring 1 includes: a cylindrical body 6, an inside surface of which is formed with outer raceway surfaces 12, 13 for the rolling elements 4, 5; and a flange 7 extending radially outwardly from an outside surface of the body 6. The flange 7 is fixed to a knuckle (not shown) of a suspension as a vehicular member.

The bearing assembly is provided with a case member 9 on its inboard side. The case member 9 possesses a plurality of displacement sensors for detecting gaps between themselves and an outside surface of an inboard end of the fixed bearing ring. The case member 9 is constituted by a cylinder member 31 and a cover member 32. The cylinder member 31 is a cylindrical member short in the axial direction. The cylinder member 31 has one end thereof fixed to an inboard end of the outer ring 1 by means of a fixing screw 26, so as to be fixed coaxially with the outer ring 1. The cover member 32 is fixed to the other end of the cylinder member 31. The cover member 32 is mounted in a manner to cap the cylinder member 31 thereby preventing the invasion of foreign substances into a bearing portion.

A plurality of radial displacement sensors 8 for detecting gaps between themselves and an outside surface of an inboard end of the rotary bearing ring are mounted to an inside surface of the cylinder member 31 of the case member 9.

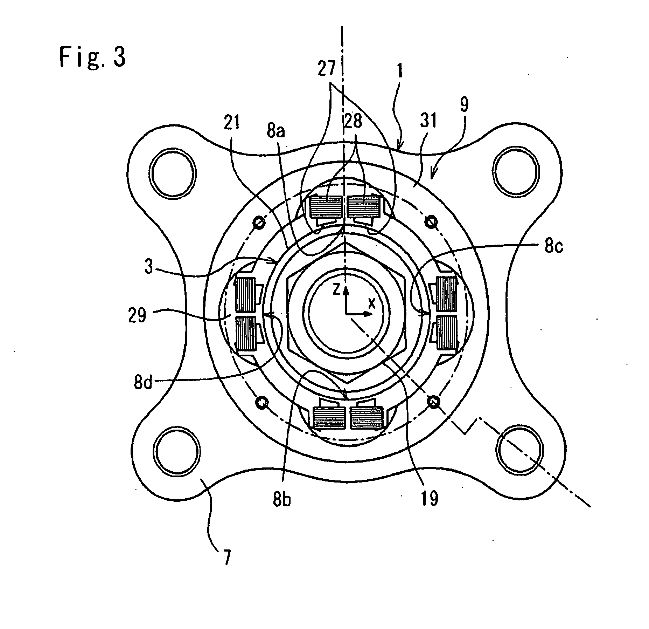

FIG.3 shows a state where the cover member 32 of the case member 9 is removed from the bearing assembly. Referring to FIG.3, the radial displacement sensors 8 (8a, 8b, 8c, 8d) are arranged circumferentially of the case member 9 at predetermined space intervals (90°). Specifically, the radial displacement sensors 8 are disposed at four places including front, rear, top and bottom positions such that the displacement sensors can detect plus or minus variations of radial gaps between themselves and the outside surface of the inboard end of the rotary bearing ring with respect to the X-axis and Z-axis directions. These four displacement sensors 8 regard an outside surface of the inner ring member 3 of the rotary bearing ring as a measurement subject 21, and detect gaps between themselves and the outside surface of the inner ring member for determination of radial displacement of the rotary bearing ring. Specifically, the case member 9 is mounted to the inboard end of the outer ring 1 such that the outside surface of the inner ring member 3 may serve as the subject of measurement 21 taken by the displacement sensors 8; which detect gaps between themselves and a shoulder portion of the inner ring member 3.

Now, description is made on the outside surface of the inner ring member 3. Referring to FIG.1, a recessed circumferential groove as the inner raceway surface 15 for the rolling element 5 is formed on the outboard side, whereas the measurement subject 21 is formed on the inboard side as defined by an outside surface portion extending straight in parallel to the axial (Y-axis) direction. The inner ring member 3 has a greater axial dimension than that of a stepped small-radius portion 16 which is formed on the inner shaft 2 for allowing the inner ring member 3 to be fitted about the inner shaft. That is, the inner ring member 3 is a cylindrical member longer than a conventional inner ring member.

Next, description is made on the radial displacement sensor 8. The displacement sensor 8 is an inductance-type displacement sensor, which is capable of detecting the variations of the gap between itself and the outside surface of the inner ring member 3 based on inductance variations. More specifically, the displacement sensor 8 includes a pair of magnetic poles 27 adjoining each other in a circumferential direction and each having a sensor coil 28 wound thereabout, as shown in FIG.1 and FIG.3.

The displacement sensors 8 are disposed at the front, rear, top and bottom positions of the bearing assembly. These magnetic-pole pairs 27 are so formed as to project radially inwardly from a single annular plate 29 and to have their radially inward end-faces confronting the outside surface of the inner ring member 3 via the radial gap.

That is, the individual magnetic-poles 27 of the radial displacement sensors 8 are formed integrally with the metallic annular plate 29, so that the displacement sensors 8 are adapted to detect the gaps between themselves and the outside surface of the inner ring member 3 with respect to the radial directions (X-axis direction and Z-axis direction). The annular plate 29 is fixed to the cylinder member 31 by means of a fixing screw 30 as sandwiched between an inside jaw 31a of the cylinder member 31 and an annular base plate 33.

In this manner, the plurality of radial displacement sensors 8 are unified with the case member 9, thus negating the need for adjustment of the circumferential positions thereof or the need for adjustment of the radial positions thereof (distance to the outside surface of the inner ring member 3) in the assembly work of the bearing assembly. Since the plurality of displacement sensors 8 are assembled to the case member 9, the individual displacement sensors 8 can be positioned relative to the measurement subject 21 by mounting the case member 9 to the outer ring 1. This results in an easy assembly work.

According to the above constitution, when a Z-axis load is applied to the rotary bearing ring, Z-axis gaps between the radial top displacement sensor 8a and the detection subject 21 and between the radial bottom displacement sensor 8b and the detection subject 21 are varied (plus-minus displacements), while the radial displacement sensors 8a, 8b are able to detect such displacements.

When an X-axis load is applied to the rotary bearing ring, X-axis gaps between the radial front displacement sensor 8c and the detection subject 21 and between the radial rear displacement sensor 8d and the detection subject 21 are varied (plus-minus displacements), while the radial displacement sensors 8c, 8d are able to measure such displacements. Further, the case member 9 assembled with the displacement sensors 8 is disposed at an end portion of the bearing assembly so as to be spaced away from the flange 7 and the flange 17. Hence, the case member is less affected by strain of peripheral portions, thus allowing the sensors to detect the above gap variations (plus-minus displacements) with high accuracies.

The case member 9 of the bearing assembly shown in FIG.1 further includes a second displacement sensor 10 (axial displacement sensor) for detecting a gap between itself and an axial-end face of the inboard end of the rotary bearing ring. This displacement sensor 10 is mounted to the cover member 32 of the case member 9. The displacement sensor is fixed to a bottom plate 32a of the cover member 32 for detecting the gap between itself and the axial-end face of the rotary bearing ring with respect to a direction parallel to the axial direction (Y-axis direction).

A measurement subject for the displacement sensor 10 is defined by the inboard axial-end face of the rotary bearing ring. The axial-end face is defined by a plate member 20 fixed to (threadedly engaged with) the nut 19. The plate member 20 has a flat plane 20a orthogonal to the axial direction. The flat plane 20a is the measurement subject for the axial displacement sensor 10. Similarly to the radial displacement sensors 8, the axial displacement sensor 10 is an inductance-type displacement sensor, which is capable of detecting inductance variations in the sensor coils thereof. Thus, each axial displacement sensor 10 is adapted to measure the axial (Y-axis) displacement of the rotary bearing ring, so that an axial load on the wheel can be determined.

An alternative arrangement may be made such that the plate member 20 is obviated whereas an inboard axial-end face of the inner ring member 3 or the like is used as the measurement subject for the axial displacement sensor 10.

Referring to FIG.2, the axial displacement sensors 10 are disposed at top and bottom places (10a, 10b) and in a concentric relation. This provides for the determination of a moment about X-axis Mx of the rotary bearing ring relative to the fixed bearing ring. The axial displacement sensors 10 may also be disposed at four places including top, bottom, front and rear places (10a, 10b, 10c, 10d).

This provides for the determination of a moment about X-axis Mx and a moment about Z-axis Mz of the rotary bearing ring relative to the fixed bearing ring. Specifically, when the moment about X-axis Mx is applied to the rotary bearing ring, the respective gaps between the axial top displacement sensor 10a and the detection subject and between the axial bottom displacement sensor 10b and the detection subject are varied, while the axial displacement sensors 10a, 10b are adapted to measure such gap variations.

When the moment about Z-axis Mz is applied, the respective gaps between the axial front displacement sensor 10c and the detection subject and between the axial rear displacement sensor 10d and the detection subject are varied, while the axial displacement sensors 10c, 10d are adapted to measure such gap variations.

According to the above constitution of the bearing assembly, the radial displacement sensors 8 are adapted to take measurements on the gap variations caused by the radial load applied to the wheel in terms of the radial displacement of the inner ring member 3. In a case where the inner shaft 2 and the inner ring member 3 are displaced in a manner to incline relative to the outer ring 1 (are subjected to the moment), the gap is varied more (amplified) at the inner ring member 3 at the inboard end than at an axially central portion of the inner shaft 2 (portion between the rolling elements 4, 5). Therefore, the accuracy of the measurements taken by the displacement sensors 8 can be increased by using the outside surface of the inner ring member 3 as the measurement subject 21.

Since the displacement sensors 8, 10 are of the inductance type which is less susceptible to the earth magnetism, a constitution less susceptible to the earth magnetism can be embodied by mounting the bearing assembly equipped with this sensor to the vehicle such as the automotive vehicle which moves as freely changing the traveling direction thereof. Furthermore, the displacement sensor featuring high durability can be embodied.

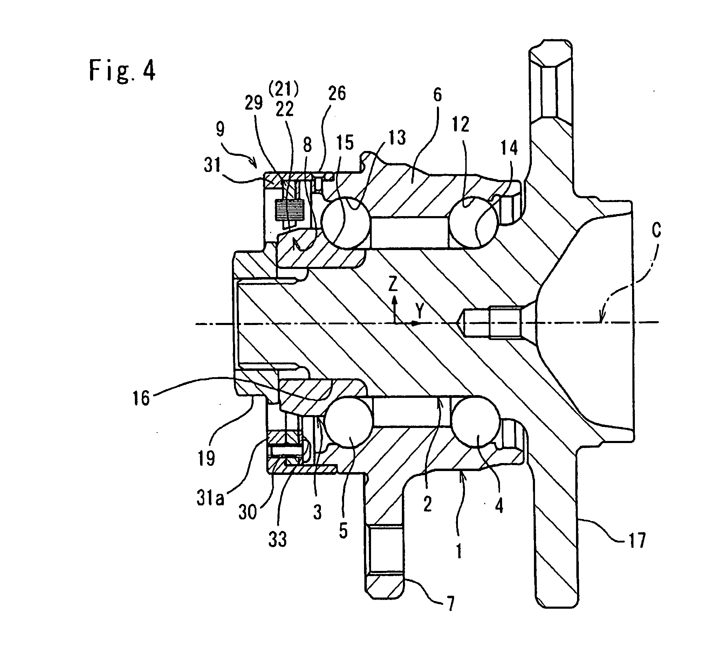

FIG.4 is a sectional view showing a bearing assembly according to another embodiment of the invention. The bearing assembly is generally constituted the same way as the first embodiment shown in FIG. 1 but differs therefrom in that the measurement subject 21 for the displacement sensor 8 is defined by a slant surface, that the displacement sensor 8 has an inside end face formed in parallel to this slant surface as defining a gap therebetween, and that the axial displacement sensor is dispensed with. FIG.4 omits the depiction of the cover member 32 of the case member 9.

This embodiment may also be arranged to omit the cover member 32.

In this bearing assembly, an outside surface of an inboard end of the inner ring member 3 is formed as a straight slant surface inclined relative to the centerline C, while this slant surface is used as a measurement plane 22 for the displacement sensor 8. The configuration of the measurement plane 22 permits the gap between the plane and the radial displacement sensor 8 to be varied in both of the radial direction and the axial direction when the load is applied to the rotary bearing ring. Thus, the radial displacement sensor 8 is adapted to detect gap variations in both of the radial direction and the axial direction. Hence, a radial displacement and an axial displacement of the rotary bearing ring can be detected by the radial displacement sensor 8.

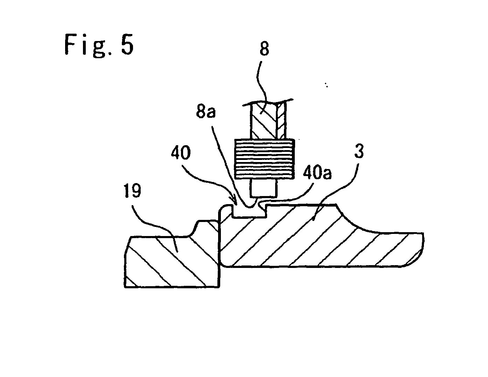

FIG.5 is a fragmentary sectional view showing a bearing assembly according to still another embodiment of the invention. This embodiment also omits the axial displacement sensor similarly to the embodiment shown in FIG.4. Instead, the outside surface of the inboard end of the inner ring member 3 constituting the rotary bearing ring is formed with an annular recess 40 at place confronted by the plurality of displacement sensors 8.

The annular recess 40 is formed in face-to-face relation with a tip face 8a of the displacement sensor 8. More specifically, a center of the tip face 8a with respect to the axial direction (the axial direction of the bearing assembly) is located above a vehicle-inboard wall 40a of the annular recess 40.

Such a configuration permits the displacement sensor 8 to detect the axial displacement of the inner ring member 3 because the displacement sensor 8 defines different gaps with respect to the outside surface of the inner ring member 3 and a bottom of the annular recess 40. That is, the displacement sensor disposed radially of the rotary bearing ring can be used for detecting the quantity of axial displacement of the rotary bearing ring.

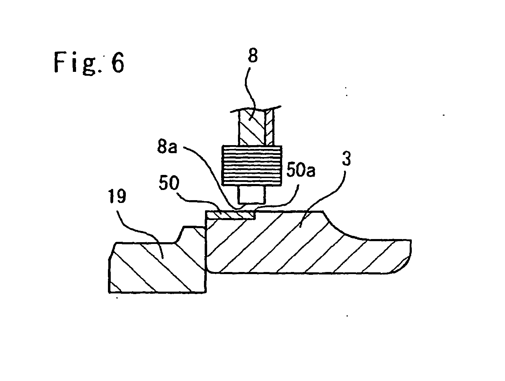

FIG.6 is a fragmentary sectional view showing a bearing assembly according to yet another embodiment of the invention. This embodiment also omits the axial displacement sensor just as the embodiment shown in FIG.4. Instead, an annular band 50 is formed in the outside surface of the inboard end of the inner ring member 3 constituting the rotary bearing ring and disposed at place confronted by the plurality of displacement sensors 8.

The annular band is formed from a different material from that of the inner ring member 3. The annular band 50 is formed in face-to-face relation with the tip face 8a of the displacement sensor 8. More specifically, the center of the tip face 8a with respect to the axial direction (the axial direction of the bearing assembly) is located above a vehicle-inboard edge 50a of the annular band 50. In addition, the inductance-type displacement sensor is used as the displacement sensor 8.

The formation of the annular band 50 from the different material from that of the inner ring member 3 can be implemented by, for example, varying a carbon content of the material forming the inner ring member 3. Specifically, in a case where the inner ring member 3 is manufactured by carburizing and quenching low carbon steel, the inner ring member can be coated with anticarburizing compounds at its portion where the annular band 50 is to be formed.

After the anticarburizing treatment, the inner ring member can be subjected to the carburizing and quenching process, whereby the carbon content of the annular band 50 can be decreased from that of the other portion which is not subjected to the anticarburizing treatment. The low carbon steel normally has a carbon content in the range of 0.1 to 0.2%. However, the carbon content of the low carbon steel is increased to about 0.7 to 0.8% by carburizing the steel.

Since the portion having the greater carbon content is less transmissive to line of magnetic force than the portion having the smaller carbon content. Hence, the formation of the annular band 50 provides for the detection of the axial displacement of the inner ring member 3. That is, the displacement sensor disposed radially of the rotary bearing ring can be used for detecting the quantity of axial displacement of the rotary bearing ring. In the embodiment shown in FIG.6, an eddy-current displacement sensor may also be used as the displacement sensor.

The embodiments shown in FIG.5 and FIG.6 may also be arranged such that some of the plurality of displacement sensors 8 are disposed in face-to-face relation with the annular recess 40 or the annular band 50 whereas the remaining displacement sensors 8 are not disposed opposite the annular recess 40 or the annular band 50. Such an arrangement provides for the variations of output pattern of the sensors.

While illustration is omitted, the outside surface of the inner ring member 3 may also have any other configuration than the slant surface in order to produce both the radial and the axial variations of the gap between the outside surface and the radial displacement sensors 8 when the load is applied to the rotary bearing ring. For example, the outside surface of the inner ring member may be formed with a recessed circumferential groove.

In this case, an arrangement may be made such that the displacement sensor 8 has its radially inside end positioned in the recessed circumferential groove so as to detect the radial gap variation associated with radial displacement of a bottom of the recessed circumferential groove and to detect the axial gap variation associated with axial displacement of a lateral side of the recessed circumferential groove.

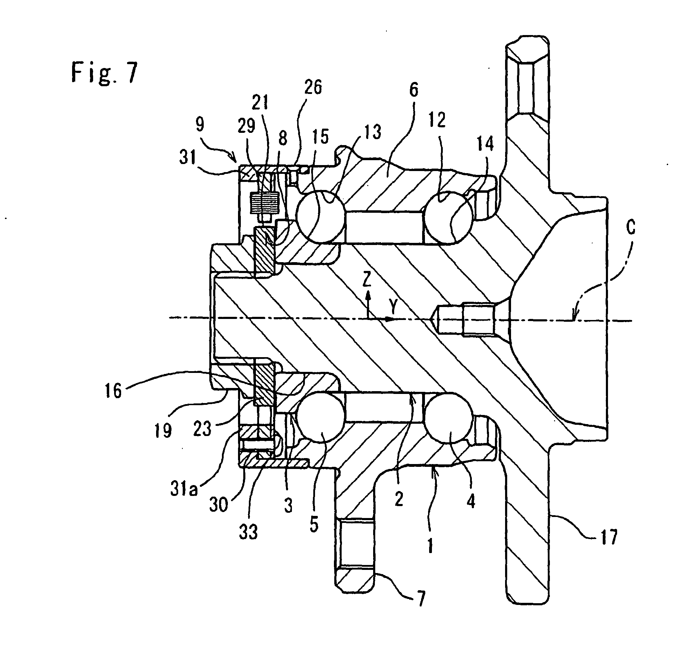

FIG.7 is a sectional view showing a bearing assembly according to still another embodiment of the invention. The bearing assembly is generally constituted the same way as the first embodiment shown in FIG.1 but differs therefrom in that an annular measurement subject member 23 is fitted about the inboard end of the rotary bearing ring as sandwiched between the inner ring member 3 and the nut 19, whereas the radial displacement sensor 8 is adapted to detect a gap between itself and an outside surface of the measurement subject member 23. The figure omits the depiction of the cover member 32 of the case member 9, the plate member 20 and the axial displacement sensor 10.

This annular measurement subject member 23 is a member (material) which produces a greater inductance variation in the displacement sensor 8 than the inner ring member 3 does. Specifically, the inner ring member 3 is formed from bearing steel, whereas the measurement subject member 23 is formed of a silicon steel sheet. Thus, the displacement sensor 8 is increased in measurement accuracies. The axial displacement can be measured by means of the same axial displacement sensor (not shown) and plate member (not shown) as those shown in FIG. 1. In these embodiments, the plate member may be formed from the same material as that of the measurement subject member 23.

While illustration is omitted, an arrangement may be made such that the same slant surface as that shown in FIG.4 or the unillustrated recessed circumferential groove (measurement plane 22) is formed in an outside surface of the annular measurement subject member 23 such that the radial displacement sensor 8 can take measurements on the radial gap and the axial gap between itself and the rotary bearing ring. In this case, the axial displacement sensor can be dispensed with.

In the individual embodiments of the aforementioned constitutions, correlation between the load acting on the tire (tire force) and the displacement of the rotary bearing ring can be previously established whereby the load can be determined. Specifically, the aforesaid displacement sensors can be used to determine X-axis, Y-axis and Z-axis components (Fsx, Fsy Fsz, Msx, Msz) of the load applied to the rotary bearing ring. Now, description is made on the determination of the load components based on the embodiment shown in FIG.1 to FIG.3.

The radial displacement sensors 8c, 8d at the front and rear positions, the radial displacement sensors 8a, 8b at the top and bottom positions and the axial displacement 10a, 10b at the top and bottom positions are connected to an arithmetic processing unit (not shown). The arithmetic processing unit may be implemented in a control unit (ECU) mounted in the vehicle body and is capable of calculating output values from the individual displacement sensors.

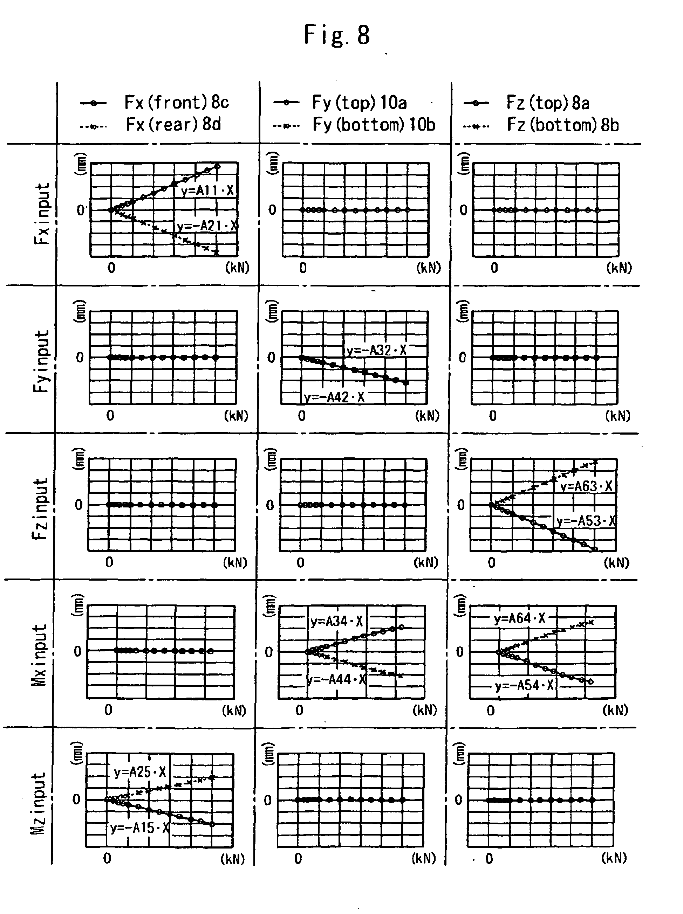

FIG.8 shows the displacements of the rotary bearing ring as determined from the output values from the individual displacement sensors when the force/moment is applied to the wheel mounted to the rotary bearing ring.

Specifically, FIG.8 graphically represents the individual displacements of the rotary bearing ring as determined from the detection values (gaps) supplied from the radial displacement sensors 8c, 8d at the front and rear positions, the axial displacement sensors 10a, 10b at the top and bottom positions and the radial displacement sensors 8a, 8b at the top and bottom positions when the rotary bearing ring is subjected to the X-axis load (Fx input), Y-axis load (Fy input) and the Z-axis load (Fz input) as the load acting on the wheel and to the moment about the X-axis (Mx input) and the moment about the Z-axis (Mz input) as the moment acting on the wheel.

A general equation (1) represents the correlation of FIG.8 in the form of a determinant (in an arranged form). A matrix M of the determinant obtained from the results shown in FIG.8 is represented by an equation (2). Specifically, the equation (1) and equation (2) represent the relation between the individual displacement sensors and the loads/moments in the individual directions in terms of determinant. An equation (3) represents an inverse matrix $M^{-1}$ of the matrix M.

The components with respect to the individual axes (Fsx, Fsy, Fsz, Msx, Mxz) of the load applied to the wheel (rotary bearing ring) can be calculated based on an equation (4) which uses the values supplied from the individual displacement sensors and the inverse matrix $M^{-1}$.

$$
\begin{bmatrix}
Fx\ (front) \\
Fx\ (rear) \\
Fy\ (top) \\
Fy\ (bottom) \\
Fz\ (top) \\
Fz\ (bottom)
\end{bmatrix}
= M \cdot
\begin{bmatrix}
Fx \\
Fy \\
Fz \\
Mx \\
Mz
\end{bmatrix}
\quad \text{---------} \quad (1)
$$

provided that,

$$M = \begin{bmatrix} m_{11} & m_{12} & m_{13} & m_{14} & m_{15} \\ m_{21} & m_{22} & m_{23} & m_{24} & m_{25} \\ m_{31} & m_{32} & m_{33} & m_{34} & m_{35} \\ m_{41} & m_{42} & m_{43} & m_{44} & m_{45} \\ m_{51} & m_{52} & m_{53} & m_{54} & m_{55} \\ m_{61} & m_{62} & m_{63} & m_{64} & m_{65} \end{bmatrix}$$

$$M = \begin{bmatrix} A_{11} & 0 & 0 & 0 & -A_{15} \\ -A_{21} & 0 & 0 & 0 & A_{25} \\ 0 & -A_{32} & 0 & A_{34} & 0 \\ 0 & -A_{42} & 0 & -A_{44} & 0 \\ 0 & 0 & -A_{53} & -A_{54} & 0 \\ 0 & 0 & A_{63} & A_{64} & 0 \end{bmatrix} \quad \text{---------} \quad (2)$$

$$M^{-1} = \begin{bmatrix} B_{11} & -B_{11} & 0 & 0 & 0 & 0 \\ 0 & 0 & -B_{23} & -B_{24} & 0 & 0 \\ 0 & 0 & -B_{33} & -B_{34} & -B_{35} & -B_{36} \\ 0 & 0 & B_{43} & B_{44} & 0 & 0 \\ -B_{51} & B_{52} & 0 & 0 & 0 & 0 \end{bmatrix} \quad \text{--------} \quad (3)$$

$$\begin{bmatrix} F_{sx} \\ F_{sy} \\ F_{sz} \\ M_{sx} \\ M_{sz} \end{bmatrix} = \begin{bmatrix} B_{11} & -B_{11} & 0 & 0 & 0 & 0 \\ 0 & 0 & -B_{23} & -B_{24} & 0 & 0 \\ 0 & 0 & -B_{33} & -B_{34} & -B_{35} & -B_{36} \\ 0 & 0 & B_{43} & B_{44} & 0 & 0 \\ -B_{51} & B_{52} & 0 & 0 & 0 & 0 \end{bmatrix} \begin{bmatrix} F_x \text{ (front)} \\ F_x \text{ (rear)} \\ F_y \text{ (top)} \\ F_y \text{ (bottom)} \\ F_z \text{ (top)} \\ F_z \text{ (bottom)} \end{bmatrix} \quad \text{-------} \quad (4)$$

If the aforementioned displacement sensors and arithmetic processing unit are used, the individual axes-components (Fsx, Fsy, Fsz, Msx, Mxz) of the load (tire force) applied to the wheel (rotary bearing ring) can be calculated based on the calculation using the output values from the individual displacement sensors and the predetermined function (inverse matrix $M^{-1}$) previously stored in the processing unit.

This provides for the determination of the force components in the individual axes-directions even if the front-side and rear-side sensors (the axial displacement sensors 10c, 10d shown in FIG.3) of the axial displacement sensors 10 are dispensed with. In addition, the radial displacement sensors 8 are symmetrically disposed at the top-bottom positions and the front-rear positions with respect to the centerline C, so that the need for correction for temperature is negated by calculating a difference between the output values from the corresponding sensor pair.

It is also possible to mount an ABS sensor (not shown) to the inboard end of the bearing assembly. In this case, the aforesaid displacement sensors 8, 10 are disposed at the inboard end where the ABS sensor is disposed. Hence, signal lines 25 of these sensors can be concentrated at the case member 9 at the inboard end of the bearing assembly so that the bearing assembly can have a simplified structure. Furthermore, a wiring operation of these signal lines is facilitated.

In addition, a through-hole 24 may be formed in the case member 9, as shown in FIG.1, so that the signal lines 25 from the individual sensors may be led out through this through-hole 24 for external wiring. At this time, the signal lines 25 may be combined to be collectively passed through the through-hole 24. This negates the need for forming a hole for the signal lines 25 in the outer ring 1.

While the foregoing embodiments are described by way of examples where the bearing assemblies are used in a driven wheel, for example, the bearing assembly may also be used in a driving wheel. In this case, the cover member 32 of the case member 9 (see FIG.1) is formed as an annular member (not shown) fitted about a shaft for driving the wheel (rotary bearing ring) into rotation, whereas a seal member is interposed between these members.

**Claims**

1. A sensor-equipped rolling bearing assembly comprising:

   - a cylindrical fixed bearing ring (1) to be fixed to a vehicle body;
   - a rotary bearing ring (2, 3) rotatably inserted through the fixed bearing ring (1) and possessing a wheel-mounting portion on an outboard side thereof; and
   - a plurality of rows of rolling elements (4, 5) rollably interposed between these bearing rings (1; 2, 3),

   **characterized in that** the bearing assembly is provided with a case member (9) having a plurality of displacement sensors (8) which are circumferentially arranged at predetermined space intervals and which detect gaps between themselves and an outside surface of an inboard end of the rotary bearing ring (2, 3), and the case member (9) is mounted to the inboard end of the fixed bearing ring.

2. The assembly according to claim 1,
   wherein the displacement sensor (8) is an inductance-type displacement sensor.

3. The assembly according to claim 1 or 2,
   wherein the case member (9) further has a second displacement sensor (10) for detecting a gap between itself and an axial-end face of the inboard end of the rotary bearing ring (2, 3).

4. The assembly according to any of claims 1 to 3,
   wherein the outside surface of the inboard end of the rotary bearing ring (2, 3) is so configured as to produce radial and axial variations of the gap between the outside surface and the displacement sensors (8, 10) when a load is applied to the rotary bearing ring (2, 3).

5. The assembly according to any of claims 1 to 4,
   wherein the rotary bearing ring (2, 3) is formed with an annular recess (40) in the outside surface of the inboard end thereof confronted by the plurality of displacement sensors (8).

6. The assembly according to any of claims 1 to 4,
   wherein the rotary bearing ring (2, 3) is formed with an annular band (50) on the outside surface of the inboard end thereof confronted by the plurality of displacement sensors (8), the annular band (50) being formed from a different material from that of the rotary bearing ring (2, 3).

7. The assembly according to any of claims 1 to 6,
   wherein an annular measurement subject member (23), which produces a greater inductance variation in the displacement sensors (8) than the rotary bearing ring (2, 3) does, is mounted to the inboard end of the rotary bearing ring (2, 3), whereas the displacement sensors (8) detect gaps between themselves and an outside surface of the measurement subject member (23).

8. The assembly according to any of claims 1 to 7,
   wherein the displacement sensors (8, 10) are connected to an arithmetic processor for calculating the respective direction components of a load applied to the rotary bearing ring (2, 3) by way of calculation using respective output values from the displacement sensors (8, 10) and a predetermined function previously stored in the processor.

**Patentansprüche**

1.  Wälzlageranordnung mit Sensorausstattung, wobei die Wälzlageranordnung folgendes aufweist:

    - einen zylindrischen feststehenden Lagerring (1), der an einem Fahrzeugkörper anzubringen ist;
    - einen rotierenden Lagerring (2, 3), der durch den feststehenden Lagerring (1) hindurch drehbar eingesetzt ist und an einer nach außen weisenden Seite einen Radbefestigungsbereich aufweist; und
    - eine Vielzahl von Reihen von Wälzelementen (4, 5), die drehbar zwischen diesen Lagerringen (1; 2, 3) angeordnet sind,

    **dadurch gekennzeichnet,**
    **daß** die Lageranordnung mit einem Gehäuseelement (9) versehen ist, das eine Vielzahl von Verlagerungssensoren (8) aufweist, die umfangsmäßig in vorbestimmten räumlichen Intervallen angeordnet sind und die Spalte zwischen sich und einer äußeren Oberfläche eines innenseitigen Endes des rotierenden Lagerrings (2, 3) detektieren, und daß das Gehäuseelement (9) an dem innenseitigen Ende des feststehenden Lagerrings angebracht ist.

2.  Anordnung nach Anspruch 1,
    wobei es sich bei dem Verlagerungssensor (8) um einen Verlagerungssensor vom Induktanz-Typ handelt.

3.  Anordnung nach Anspruch 1 oder 2,
    wobei das Gehäuseelement (9) weiterhin einen zweiten Verlagerungssensor (10) aufweist, um einen Spalt zwischen sich und einer axialen Endfläche des innenseitigen Endes des drehbaren Lagerrings (2, 3) zu detektieren.

4.  Anordnung nach einem der Ansprüche 1 bis3,
    wobei die äußere Oberfläche des innenseitigen Endes des drehbaren Lagerrings (2, 3) derart konfiguriert ist, daß radiale und axiale Veränderungen des Spalts zwischen der äußeren Oberfläche und den Verlagerungssensoren (8, 10)
    erzeugt werden, wenn eine Last auf den drehbaren Lagerring (2, 3) aufgebracht wird.

5.  Anordnung nach einem der Ansprüche 1 bis 4,
    wobei der drehbare Lagerring (2, 3) in der äußeren Oberfläche seines innenseitigen Endes mit einer ringförmigen Vertiefung (40) ausgebildet ist, der die Vielzahl von Verlagerungssensoren (8) zugewandt gegenüberliegt.

6.  Anordnung nach einem der Ansprüche 1 bis 4,
    wobei der drehbare Lagerring (2, 3) an der äußeren Oberfläche seines innenseitigen Endes mit einem ringförmigen Band (50) ausgebildet ist, dem die Vielzahl von Verlagerungssensoren (8) zugewandt gegenüberliegt, wobei das ringförmige Band (50) aus einem anderen Material als der drehbare Lagerring (2, 3) gebildet ist.

7.  Anordnung nach einem der Ansprüche 1 bis 6,
    wobei ein ringförmiges Meßgegenstandselement (23), das eine höhere Induktanzänderung bei den Verlagerungssensoren (8) hervorruft als der drehbare Lagerring (2, 3), an dem innenseitigen Ende des drehbaren Lagerrings (2, 3) angebracht ist, während die Verlagerungssensoren (8) Spalte zwischen sich und einer äußeren Oberfläche des Meßgegenstandselements (23) detektieren.

8.  Anordnung nach einem der Ansprüche 1 bis 7,
    wobei die Verlagerungssensoren (8, 10) mit einem Rechenprozessor verbunden sind, um die jeweiligen Richtungskomponenten einer auf den drehbaren Lagerring (2, 3) aufgebrachten Last durch Berechnung unter Verwendung von jeweiligen Ausgangswerten von den Verlagerungssensoren (8, 10) und einer vorab in dem Prozessor gespeicherten, vorbestimmten Funktion zu berechnen.

**Revendications**

1.  Ensemble palier à roulement équipé de capteurs, comprenant:

- une bague de palier fixe cylindrique (1) à fixer à une carrosserie de véhicule;
- une bague de palier rotative (2, 3) insérée de façon rotative à travers la bague de palier fixe (1) et possédant une partie de montage de roue sur un côté extérieur de celle-ci; et
- une pluralité de rangées d'éléments de roulement (4, 5) interposés de façon roulante entre ces bagues de palier (1; 2, 3),

**caractérisé en ce que** l'ensemble palier est pourvu d'un élément de coffrage (9) comportant une pluralité de capteurs de déplacement (8) qui sont agencés de façon circonférentielle à des intervalles d'espace prédéterminés et qui détectent des espaces entre eux-mêmes et une surface extérieure d'une extrémité intérieure de la bague de palier rotative (2, 3), et l'élément de coffrage (9) est monté sur l'extrémité intérieure de la bague de palier fixe.

2. Ensemble selon la revendication 1,
   dans lequel le capteur de déplacement (8) est un capteur de déplacement à inductance.

3. Ensemble selon la revendication 1 ou 2,
   dans lequel l'élément de coffrage (9) comporte en outre un second capteur de déplacement (10) destiné à détecter un espace entre lui-même et une face d'extrémité axiale de l'extrémité intérieure de la bague de palier rotative (2, 3).

4. Ensemble selon une quelconque des revendications 1 à 3,
   dans lequel la surface extérieure de l'extrémité intérieure de la bague de palier rotative (2, 3) est configurée afin de produire des variations radiale et
   axiale de l'espace entre la surface extérieure et les capteurs de déplacement (8, 10) lorsqu'une charge est appliquée sur la bague de palier rotative (2, 3).

5. Ensemble selon une quelconque des revendications 1 à 4,
   dans lequel la bague de palier rotative (2, 3) est formée avec un évidement annulaire (40) dans la surface extérieure de son extrémité intérieure en face de la pluralité de capteurs de déplacement (8).

6. Ensemble selon une quelconque des revendications 1 à 4,
   dans lequel la bague de palier rotative (2, 3) est formée avec une bande annulaire (50) sur la surface extérieure de son extrémité intérieure en face de la pluralité de capteurs de déplacement (8), la bande annulaire (50) étant formée à partir d'un matériau différent de celui de la bague de palier rotative (2, 3)

7. Ensemble selon une quelconque des revendications 1 à 6, dans lequel un élément de sujet de mesure annulaire (23), qui produit une variation d'inductance plus importante dans les capteurs de déplacement (8) que la bague de palier rotative (2, 3), est monté sur l'extrémité intérieure de la bague de palier rotative (2, 3), alors que les capteurs de déplacement (8) détectent des espaces entre eux-mêmes et une surface extérieure de l'élément de sujet de mesure (23).#

8. Ensemble selon une quelconque des revendications 1 à 7,
   dans lequel les capteurs de déplacement (8, 10) sont connectés à un processeur arithmétique pour calculer les composantes de direction respectives d'une charge appliquée sur la bague de palier rotative (2, 3) par l'intermédiaire d'un calcul utilisant des valeurs de sortie respectives à partir des capteurs de déplacement (8, 10) et une fonction prédéterminée stockée auparavant dans le processeur.

Fig. 1

EP 1 764 521 B1

Fig. 2

EP 1 764 521 B1

EP 1 764 521 B1

Fig. 3

14

EP 1 764 521 B1

Fig. 4

15

Fig. 5

Fig. 6

8

8a

50

19

50a

3

Fig. 7

Fig. 8

**REFERENCES CITED IN THE DESCRIPTION**

**Patent documents cited in the description**

- JP 2002340922 A